# EUROPEAN PATENT SPECIFICATION

(11) **EP 1 453 674 B1**
(45) Date of publication and mention of the grant of the patent: **14.03.2007**
(21) Application number: 02805229.8
(22) Date of filing: 13.12.2002
(51) Int. Cl.: B32B 27/36, B32B 27/28

(54) **LAMINATE MADE FROM AN ETHYLENE−METHYL ACRYLATE COPOLYMER AND POLYESTER**
LAMINAT AUS EINEM ETHYLEN-METHYLACRYLAT COPOLYMER UND POLYESTER
STRATIFIE FAIT D'UN COPOLYMERE D'ETHYLENE-ACRYLATE DE METHYLE ET DE POLYESTER

(30) Priority: 14.12.2001 US 341402 P
(43) Date of publication of application: 08.09.2004
(73) Proprietor: E.I. DU PONT DE NEMOURS AND COMPANY, Wilmington, Delaware 19898 (US)
(72) Inventor: TROUILHET, Yves, M., CH-1222 Vesenaz (CH); RIOUX, Bernard, F-92800 Puteaux (FR)
(74) Representative: Morf, Jan Stefan
(86) International application number: PCT/US2002/041722
(87) International publication number: WO 2003/051630

(56) References cited:
- US-A- 2 953 551
- US-A- 5 532 066

## Description

### Field of Invention

The present invention relates to a multilayer laminate comprising a polyester-based layer and a layer comprising a copolymer of ethylene and methyl acrylate produced by a tubular process. This laminate may comprise additional layers and can be used in the packaging of goods.

### Background of the Invention

Polyester is well known and well used in the packaging industry, especially in the manufacture of packaging films. Polyester films are particularly thermally stable, they are easy to print, they are resistant. These films are particularly useful in the packaging of food.
Nevertheless, in some cases, for instance when sealing is required, a mono-layered polyester film may not be sufficient and an additional film is needed. It is known that adhesion to a polyester film is difficult. Usually, in order to achieve the adhesion of a second film to a polyester film, a primer is needed. A primer is an adhesive that is coated on the polyester film. These primers are usually polyurethane dissolved in solvents or polyethyleneimine dispersed in water. Such solvents include methyl ethyl ketones, ethyl acetate or alcohol. The use of primers in the manufacture of multilayered films presents several drawbacks: the priming station requires extra labor to prepare and feed the liquids, the solvents must be evaporated to avoid any residuals that may migrate into the food, and the emission of these solvents in air may be detrimental to the environment. Moreover, one week curing is required before a complete adhesion is achieved.
There is therefore a strong need in the industry for co-extrudable adhesives that could replace primers in multilayered films or laminates comprising at least a polyester based layer.
Until recently, ethylene alkyl acrylate copolymers have been excluded from such multilayered films or laminates because they were known to not have sufficient adhesive strength to prevent delamination.

US 5, 532, 066 discloses ethylene alkyl acrylate copolymers which are produced by a specific process using a multi-zone autoclave reactor and which have a high melting point temperature and an improved adhesive strength. Nevertheless, in some applications like peelable lids, where the laminate comprises a sealant layer and where the packed product may be a liquid, a higher adhesion strength is needed. In particular, in these applications, it is important that the adhesive strength between the polyester based layer and the adhesive is stronger than the seal strength of the sealant layer.

US 2,953,551 discloses a composition obtained by copolymerisation of ethylene and methyl acrylate monomers in a tubular reactor, which is non homogenous.

Therefore, there is still a need for a co-extrudable adhesive that would present an excellent adhesive strength to polyester films, and that could further be used as an effective adhesive in a laminate comprising a polyester based layer and a sealant layer.

### Summary of the Invention

Now, it has been surprisingly found that the use of a copolymer of ethylene and methyl acrylate prepared by copolymerization of ethylene monomers and methyl acrylate monomers in a continuous tubular reactor make it possible to manufacture polyester based laminates showing a very good adhesion strength between the polyester layer and the copolymer layer. Where the laminate further comprises a sealant layer, this adhesion strength can also be higher than the seal strength of the sealant layer.

A first aspect of the invention is a multilayer laminate comprising:
a) a first layer comprising at least a polyester, and
b) a second layer comprising at least a copolymer of ethylene and methyl acrylate obtained by copolymerization of ethylene monomers and methyl acrylate monomers in a continuous tubular reactor.

Another aspect of the invention is a process for preparing the laminate above, comprising extrusion coating the second layer to the first layer at a temperature of at least 300°C.

The laminates of the invention show an improved adhesive strength between the two layers compared to laminates of the prior art. Adhesion between the two layers of the laminate withstands water immersion during six weeks.

The laminates of the invention can find use in particular in food packagings like snack pouches, polyester lids.

### Brief description of the drawings

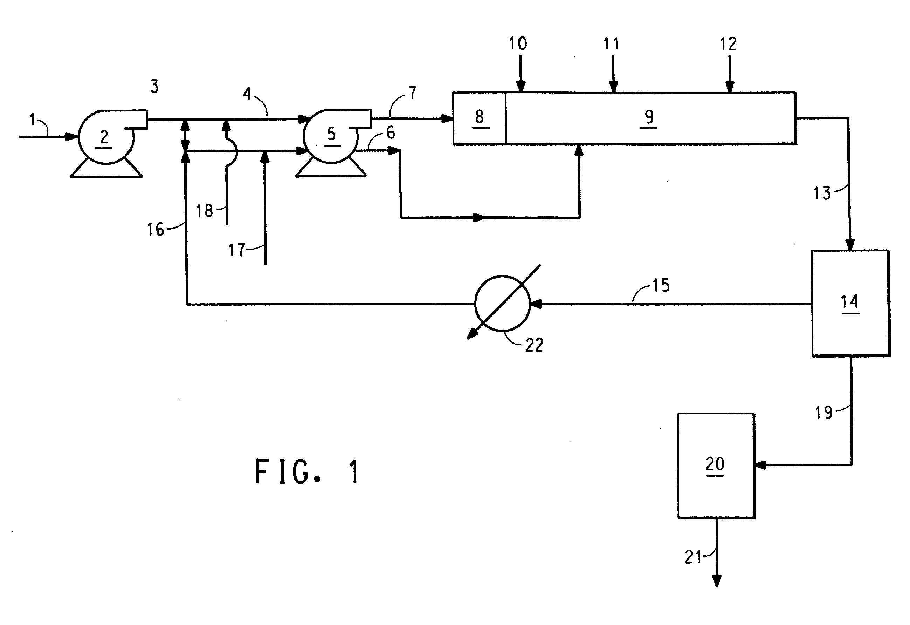

Fig. 1 is a schematic diagram of the process of the invention.

### Detailed description of the invention

The first layer of the laminate of the invention comprises at least a polyester. This layer may be a film, sheet, a woven or knitted fabric or a nonwoven. In a preferred embodiment of the invention, this layer is a film or a nonwoven. More preferably, it is a film. Preferably, this film consists of polyester. This polyester film may be non-oriented, oriented or biaxially oriented. Preferably, the film is biaxially oriented.
In a preferred embodiment of the invention, the polyester film is corona treated. It may also be flame treated.

Polyesters films suitable to the present invention are commercially available under the tradename "Mylar®" from DuPont Teijin Films.

The second layer of the laminate of the invention comprises at least a copolymer of ethylene and methyl acrylate which is obtained by copolymerization of ethylene monomers and methyl acrylate monomers in a continuous tubular process. A suitable tubular reactor for producing the copolymer of ethylene and methyl acrylate useful in the laminate of the invention is shown on Fig. 1. Referring to this figure, ethylene gas is fed from line **1** to a primary compression stage **2,** exiting the compressor at line **3.** The ethylene at line **3** is then combined with the desired comonomers and to produce line **4.** A two-side hyper compressor **5** runs at a constant throughput with even feed rates to each side. As a result, a small amount of recycled gas from **16** is combined with the fresh feed from **4** to feed one side of the hyper. The other side of the hyper typically compresses 100% recycled gas. The side of the hyper that contains the fresh ethylene feed compresses the stream to line **6** (referred to as the "side feed" henceforth), whereas the other stream is compressed to form line **7** (referred to as the "front feed").

The front feed 7 then enters a jacketed, tubular reactor. The first part of the reactor is hot steam jacketed **8** and heats the ethylene/comonomer mixture to a temperature where polymerization can be started at **9** by injecting peroxide initiators at the point marked **10.** Multiple initiators are used at **10** to allow for the reaction to occur over the widest possible temperature range, with reaction started by the most active initiator triggering subsequent reaction by second most active initiators; reaction by the second most active initiator triggering reaction by the third most active initiator, and so forth. At least two different initiators are used at each injection point. The polymerization process creates heat that is partially, but not completely, removed by the jacketed water system of reactor **9.** As a result, the temperature in the reactor increases as a function of its length as long as the polymerization reaction is ongoing. Preferably, the initial temperature at which the reaction should be started is in the range of about 150 °C to about 220 °C. Preferably, the highest temperature that the reaction should be allowed to reach is in the range of about 225 °C to about 325 °C.

Free radical initiators are used to catalyze the polymerization. The initiators are injected at points **10** and **11,** and optionally at point **12.** Typically, the initiators are dissolved in an organic solvent such as isododecane or 2-propanol. Some examples of initiators useful in the practice of this invention are t-butyl peroxypivalate, t-butyl peroxy(2-ethylhexanoate), t-butyl peroxyacetate, t-butyl perbenzoate, and di-t-butyl peroxide.

The "side stream" **6** is injected into the reactor at a point located approximately one-third of the total length of the reactor. Because stream 6 has not commenced polymerization and is hence cooler than the partially reacted stream that was fed in the front of the reactor, the total stream is cooled by the direct mixing action of stream **6.** The temperature to which the mixture is cooled is controlled to be the same point at which the most active initiator used in the polymerization will start to react. At point **11,** additional initiators are injected to restart the polymerization process.

The polymerization reaction continues until the available comonomers and free radical initiators are consumed. Preferably, additional peroxide initiator can be injected at point **12** if reactor temperatures are low enough (through removal of heat via the jacketing). In addition, the use of additional initiator injection at **12** allows for higher conversions than those obtained if only **10** and **11** are used.

The mixture of polymer and gas exits the reactor at **13** and enters a separation vessel **14,** which acts to disengage a large quantity of the residual ethylene gas and unreacted monomers from the polymer produced in the reactor. The unreacted ethylene and monomers enter a direct recycle stream 15 where it is cooled by 22 to remove low molecular weight oligomers ("wax") that tend to form in the reactor. The polymer-rich phase from this separation, 19, is sent to a second separation stage 20, where a large quantity of the ethylene remaining in the polymer is flashed off.

The polymer phase left over after separation in vessel (**21**) may then be sent to either a standard extruder or gear pump for eventual pelletization. The copolymers of the invention can be produced in the form of pellets.

The methyl acrylate comonomer is injected either via line **17** to the recycle stream that goes predominantly to the front of the reactor, or via line **18** to the stream containing predominantly fresh ethylene. The amount of comonomer injected into lines **17** and **18** controls the comonomer content of the final polymer produced by the unit. Although line **18** may, in principle, contain anywhere from 0 to 100% of the total comonomer feed, for purposes of the present invention the preferred ratio of MA introduced to the "front feed" and to the "side feed" is from about 40 to 60% of the total MA feed. In other words, preferably 40 to 60% of the total acrylate fed to the reactor is fed to the front (with the remainder to the side). This produces a polymer that contains significant heterogeniety without containing an overwhelming number of polyethylene chains as reflected in the melting point data characterizing the ethylene methyl acrylate copolymer. For purposes of this invention the relative degree of heterogeneity being referred to herein is conceptual the proportioning or repartioning of comonomers on molecular weight distribution basis, that inherently takes place in a tubular reactor or the like (particularly relative to a highly mixed single stage autoclave reactor). Injection of a higher fraction of the overall methyl acrylate into the "front feed" of the reactor will lead to earlier consumption of the methyl acrylate in the system (i.e., more favorable reaction kinetics), leading to more polyethylene-like chains being produced near the end of the tubular reactor. Conversely, injection of a higher fraction of the total methyl acrylate to the "side feed" produces nothing but polyethylene in the first third of the reactor illustrated in the drawing. On the other hand, a single stage stirred autoclave tends to produces an essentially uniform proportion of comonomers through out the molecular weight distribution, particularly at narrow polydispersity. Preferably, the methyl acrylate feed is split nearly evenly between the two streams, so that the final product has a certain degree of heterogeneity without creating an excessive amount of the polyethylene-like chains. Preferably, the reactor temperature varies over the length of the tubular reactor. Thus for the tubular reactor illustrated in Figure 1 preferably 40 to 55% of the total methyl acrylate comonomer is fed to the "front feed" while the remaining 60 to 45% if fed to the "side feed" to account for the "side feed: being a third of the way along the length of the tubular reactor. In this manner a heterogeneous copolymer at a targeted total methyl acrylate content can be produced without an excessive amount of polyethylene-like chains and associated melt index depression yet copolymer with elevated DSC melting point relative to a stirred autoclave derived material is achieved.

The copolymer of ethylene and methyl acrylate produced by the tubular reaction presents a large degree of heterogeneity compared to that made by a well-mixed (autoclave-based) process.

The resulting heterogeneous copolymers of ethylene and ethyl and methyl acrylate made by this reaction have better adhesion to polyester substrates than a corresponding stirred-reactor copolymer.

The methyl acrylate monomer is preferably present in the copolymer in a proportion ranging from 8-25%, and more preferably from 12-21% relative to the weight of the copolymer.

The copolymers of ethylene and methyl acrylate of the invention show a DSC melting point measured according to ASTM D-3418, depending on the weight percentage of methyl acrylate monomer in the copolymer, as given in the following TABLE I:

**TABLE I**

| % of methyl acrylate | DSC melting point |
|---|---|
| 9% | 101 °C |
| 13% | 98°C |
| 20% | 92°C |
| 25% | 90°C |

They have a melt flow index (MFI) ranging from about 0.3 to about 50, preferably from about 5 to about 10, measured according to ASTM D-1238, condition E, 190°C at 2160 grams.

In a preferred embodiment of the invention, the second layer consists of the copolymer of ethylene and methyl acrylate described above.

The laminate of the invention preferably has a total thickness ranging from about 3 microns to about 2000 microns. When the first layer of the laminate is a fabric, a nonwoven or a sheet, this total thickness preferably ranges from about 50 microns to about 2000 microns. When the first layer of the laminate is a polymeric film, this total thickness preferably ranges from about 3 microns to about 50 microns.

In an embodiment of the invention, the laminate further comprises at least one additional layer contiguous to the second layer. This additional layer may be a nonwoven, a fabric, paper, board or a polymeric film. Polymeric films include films of polyethylene, ethylene acid copolymer, ionomer, copolymer of ethylene and alkyl acrylate, polyester, and/or mixtures thereof.

In a preferred embodiment of the invention, the additional layer is a sealable layer. Sealable layers suitable to the invention include films of polyethylene, polypropylene, ethylene acid copolymer, ionomer, copolymer of ethylene and alkyl acrylate, non-oriented polyester, and/or mixtures thereof. The seal strength of the sealable layer is preferably less than the adhesion strength of the second layer to the first layer.

Each of the layers mentioned above may comprise the usual additives including plasticizers, stabilizers, antioxidants, ultraviolet ray absorbers, hydrolytic stabilizers, anti-static agents, dyes or pigments, fillers, fire-retardants, lubricants, slip additives, antiblock additives, reinforcing agents such as glass fiber and flakes, processing aids, for example release agents, and/or mixtures thereof.

The laminate of the invention may be prepared by extrusion coating the second layer, which is optionally coextruded with the additional layers, on the first layer. In another embodiment of the invention, the laminate may be prepared by co-extrusion the first and the second layers and optionally the additional layers. It is preferably prepared by extrusion coating.

The extrusion coating process allows one to coat a substrate with polymer layers in a molten stage. The polymers in pellet form are conveyed in the hopper of the extruders. The extruders melt the polymer and develop a certain pressure to force it through a die. The melt of the different polymers merge in the feed bloc or directly in the flat die. Production coextrusion coating lines has usually 2 or 3 extruders which supply polymer melts to the same die. The melt curtain leaving the die is drawn by two rolls forming the nip: a chill-roll and a rubber coated roll. The total thickness of polymers in the nip is typically between 15 micron and 50 micron. The polymer is pressed on the substrate in the nip to develop adhesion, cooled by the chill-roll and solidified. The substrate which is unwound from a roll can be flame treated, corona treated or primed before entering the nip where it is coated by the melt curtain. The typical line speeds are between 100 and 300 m/min.

When the laminate of the invention is prepared by extrusion coating, the melt temperature of the copolymer of ethylene and methyl acrylate is preferably at least 300°C, more preferably at least 310°C, and even more preferably at least 320°C.

The invention will be further described in the following Examples. In the following examples, the substrate layer is always indicated in the first place and separated from the coextruded layers by //.

### Examples

### Example 1:

A copolymer of ethylene and methyl acrylate was prepared by polymerizing ethylene monomers and methyl acrylate monomers in the tubular reactor described in Fig. 1. Between 40 w% and 55 w% of the total weight of the methyl acrylate fed was fed to the front of the reactor. The peak temperatures were regulated between 250°C and 300°C. The copolymer obtained comprises about 20 w% of methyl acrylate monomer relative to the total weight of the copolymer. The copolymer as prepared in this Example is further referred to as EMA 1.

### Example 2:

A 3 layers sample was made by extrusion coating on a pilot line.
Mylar®12A, a 12 microns (0.48-mil) bi-axially oriented polyester (PET) film, available from DuPont Teijin Films, was corona treated and coated at 100 meters/min (300 ft/min) line speed with a 10 microns (0.4-mil) layer of EMA 1 and a 18 microns (0.7-mil) layer of a low-density polyethylene (Stamylan® 2404 available from DSM, Netherlands) simultaneously at a melt temperature of 315°C (600F.), such that the EMA1 layer was sandwiched between the PET layer and the polyethylene layer.
The adhesive strength of EMA1 to the oriented polyester was determined using the Tappi test method T540 wd-00 (Determination of Polyethylene adhesion to Non-Porous Substrates) and was found to be: 600 g/inch (240 N/m).

### Example 3:

### INFLUENCE OF EXRUSION COATING PARAMETERS ON ADHESION TO ORIENTED POLYESTER FILM

EMA1 was co-extruded with low density polyethylene (Stamylan®2404 available from DSM) on bi-axially oriented polyester film with a thickness of 23 microns (Mylar® 23A available from DuPont Teijin Films) on a pilot line.
EMA1 was introduced in an extruder having 2.5 inch in diameter and the polyethylene in an extruder having 3.5 inch in diameter. Both extruders had a length over diameter ratio of 30. The slot of the die was 800 mm wide and the distance between the lips 0.7 mm. The air gap was maintained at 150 mm.
For a line speed set at 100 m/min, for a corona treatment set at 4.5 kW of the 55 cm wide polyester film and for layer thickness of 10 micron for EMA1 and 40 micron for the polyethylene, the influence of the melt temperature is given in Table 2.
The adhesive strengths are measured as described in Tappi test method T540 wd-00 (Determination of Polyethylene adhesion to Non-Porous Substrates).

**TABLE 2**

| Melt temperature (°C) | Adhesive strength (N/m) |
|---|---|
| 320 | 320 |
| 310 | 300 |
| 300 | 270 |
| 290 | 260 |

For a melt temperature set at 320 °C, for a line speed of 100 m/min and for layer thickness of 10 micron for EMA1 and 40 microns for the polyethylene, the adhesive strength with and without corona treatment of the polyester film is given in Table 3.

**TABLE 3**

| Treatment | Adhesive strength (N/m) |
|---|---|
| With corona treatment | 320 |
| Without corona treatment | 90 |

For a melt temperature set at 320°C, for a corona treatment at 4.5 kW of the 55 cm wide polyester film and for layer thickness of 10 micron for EMA1 and 40 micron polyethylene, the adhesive strength is given in Table 4 for two different line speeds.

**TABLE4**

| Line speed (m/min) | Adhesive strength (N/m) |
|---|---|
| 100 | 320 |
| 150 | 260 |

Finally for a corona treatment set at 4.5 kW of the 55 cm wide polyester film running at 100 m/min, the adhesive strength of a thinner polyethylene (PE) co-extruded layer of 10 micron are given in Table 5 at different melt temperatures.

**TABLE 5**

| Melt temperature (°C) | Adhesive strength (N/m) |
|---|---|
| 320 | Could not separate |
| 310 | 160 |
| 300 | 120 |

The thinner sample Mylar®12A/IEMA1/PE with layer thickness of 12//10/10 micron respectively that could not be separated was dipped in water during 6 weeks. The adhesive strength was 270 N/m after this treatment.

### Example 4:

EMA1 was extruded at 320°C melt temperature and coated at 50 m/min line speed on both sides of a PET woven fabric 400 micron thick, corona treated. The final thickness of the EMA1/PET-fabric/EMA1 is 600 micron.
The adhesive strength measured by the Tappi test method T540 wd-00 (Determination of Polyethylene adhesion to Non-Porous Substrates) is 670 N/m.

### Example 5:

### PET-FILM BASED PEELABLE LID

EMA1 with a layer thickness of 10 micron was co-extruded at 320°C melt temperature with a blend of 98% of a modified ethylene/methyl acrylate copolymer (Appeel® 20D745 available from E.I. du Pont de Nemours and Company) and of 2% of a slip additive (Conpol® 20S2 available from E.I. du Pont de Nemours and Company) at 320°C as well with a layer thickness of 20 micron, on Mylar®12A having a layer thickness of 12 micron. This structure of a peelable lid has been sealed to polystyrene strips at 140°C seal bar temperature in contact with Mylar®12A during 1 second and with a pressure of 0.3 Mpa.
The seal/peel force to polystyrene measured with the Tappi test method T540 wd-00 (Determination of Polyethylene adhesion to Non-Porous Substrates) is equal to 240 N/m. Delamination occurred at the Appeel® 20D745/polystyrene interface leaving the integrity of the 3 layers peelable lid.

## Claims

1. A multilayer laminate comprising:
a) a first layer comprising at least a polyester, and
b) a second layer comprising at least a copolymer of ethylene and methyl acrylate obtained by copolymerization of ethylene monomers and methyl acrylate monomers in a continuous tubular reactor.

2. The laminate of claim 1, wherein the first layer is a corona treated polyester film.

3. The laminate of claim 1, wherein the second layer consists of the copolymer of ethylene and methyl acrylate obtained by copolymerization of ethylene monomers and methyl acrylate monomers in a continuous tubular reactor.

4. The laminate of claim 1, wherein it further comprises at least an additional layer contiguous to the second layer.

5. The laminate of claim 4, wherein the additional layer is a sealable layer including films of polyethylene, polypropylene, ethylene acid copolymer, ionomer, copolymer of ethylene and alkyl acrylate, non-oriented polyester, and/or mixtures thereof.

6. Process for preparing the laminate of claim 1, comprising extrusion coating the second layer to the first layer at a temperature of at least 300°C.

## Patentansprüche

1. Mehrlagiges Laminat, bestehend aus:
a) einer ersten Lage, welche mindestens einen Polyester enthält, und
b) einer zweiten Lage, welche mindestens ein Copolymer von Ethylen und Methylacrylat enthält, welches durch Copolymerisieren von Ethylenmonomeren und Methylacrylatmonomeren in einem kontinuierlichen Rohrreaktor gewonnen wird.

2. Laminat gemäß Anspruch 1, bei welchem die erste Lage aus einem einer Coronabehandlung unterzogenen Polyesterfilm besteht.

3. Laminat gemäß Anspruch 1, bei welchem die zweite Lage aus einem Copolymer von Ethylen und Methylacrylat besteht, welches durch Copolymerisieren von Ethylenmonomeren und Methylacrylatmonomeren in einem kontinuierlichen Rohrreaktor gewonnen wird.

4. Laminat gemäß Anspruch 1, welches weiterhin mindestens eine zusätzliche Lage enthält, welche an die zweite Lage angrenzt.

5. Laminat gemäß Anspruch 4, bei welchem die zusätzliche Lage aus einer abdichtungsfähigen Lage besteht und Filme aus Polyethylen, Polypropylen, Ethylensäurecopolymer, Ionomer, Copolymer von Ethylen und Alkylacrylat, nicht orientiertes Polyester und/oder Mischungen derselben mit umfasst.

6. Verfahren zur Herstellung des Laminats gemäß Anspruch 1, welches eine Extrusionsbeschichtung der zweiten Lage auf die erste Lage bei einer Temperatur von mindestens 300 °C umfasst.

## Revendications

1. Stratifié multicouche comprenant :
a) une première couche comprenant au moins un polyester, et
b) une seconde couche comprenant au moins un copolymère d'éthylène et d'acrylate de méthyle obtenu par la copolymérisation de monomères d'éthylène et de monomères d'acrylate de méthyle dans un réacteur tubulaire continu.

2. Stratifié selon la revendication 1, dans lequel la première couche est un film polyester traité par un procédé couronne.

3. Stratifié selon la revendication 1, dans lequel la seconde couche est constituée du copolymère d'éthylène et d'acrylate de méthyle obtenu par la copolymérisation de monomères d'éthylène et de monomères d'acrylate de méthyle dans un réacteur tubulaire continu.

4. Stratifié selon la revendication 1, qui comprend de manière supplémentaire au moins une couche supplémentaire contiguë à la seconde couche.

5. Stratifié selon la revendication 4, dans lequel la couche supplémentaire est une couche pouvant être hermétiquement fermée incluant les films de polyéthylène, de polypropylène, de copolymère d'acide éthylène, d'ionomère, de copolymère d'éthylène et d'acrylate d'alkyle, de polyester non orienté, et/ou de mélanges de ceux-ci.

6. Procédé de préparation du stratifié selon la revendication 1, comprenant le revêtement par extrusion de la seconde couche sur la première couche à une température d'au moins 300°C.
